# EUROPÄISCHE PATENTANMELDUNG

(11) **EP 0 977 223 A2**
(43) Veröffentlichungstag der Anmeldung: **02.02.2000**
(21) Anmeldenummer: 99114830.5
(22) Anmeldetag: 29.07.1999
(51) Int. Cl.: H01H 3/20, H01H 3/10

(54) **Elektrisches Schaltgerät**

(30) Priorität: 29.07.1998 DE 19833983
(71) Anmelder: E.G.O. ELEKTRO-GERÄTEBAU GmbH, D-75038 Oberderdingen (DE)
(72) Erfinder: Reimold, Günther, 75038 Oberdingen-Flehingen (DE); Platt, Nils, Huntington Beach, CA92647 (US); Mannuss, Siegfried, 75447 Sternenfels (DE)
(74) Vertreter: Patentanwälte Ruff, Beier, Schöndorf und Mütschele

(57) **Zusammenfassung**

Die Erfindung schafft ein elektrisches Schaltgerät (89) mit einem Schaltgerätsockel (41), mit wenigstens einem Schalter (64, 121), mit einer an dem Schaltgerätsockel gelagerten Verstelleinrichtung (90, 116) zur Beeinflussung des Schaltverhaltens des Schalters und mit einer Handhabe (94) mit Betätigungsflächen (99) für einen Benutzer, wobei eine gegen einen elastischen Widerstand (96) lösbare Blockiereinrichtung (104, 106; 112, 119) in der Verbindung zwischen Handhabe und Lagerung in dem Schaltgerätsockel vorgesehen ist und die Blockiereinrichtung im ungelösten Zustand einen Formschluß zwischen Handhabe und Schaltgerätsockel bildet. Vorteilhaft ist die Blockiereinrichtung im Schaltgerätsockel zwischen einer Steuerachse (90) der Handhabe und dem Schaltgerätsockel vorgesehen, beispielsweise durch einen Vorsprung (119) an der Steuerachse, der axial verschiebbar aus einer Ausnehmung (112) in dem Schaltgerätsockel bringbar ist zur freien Drehbarkeit.

## Beschreibung

### ANWENDUNGSGEBIET UND STAND DER TECHNIK

Die Erfindung betrifft ein elektrisches Schaltgerät, insbesondere ein taktendes Leistungssteuergerät, das einen Schaltgerätsockel aufweist, wenigstens einen Schalter, eine an dem Sockel gelagerte Verstelleinrichtung zur Beeinflussung des Schaltverhaltens des Schalters und eine Handhabe mit Betätigungsflächen für einen Benutzer.

Derartige Schaltgeräte sind beispielsweise aus der DE 26 25 716 bekannt. Es wird als störend angesehen, daß ein solches Schaltgerät von jedermann benutzt werden kann, insbesondere ist die Gefahr groß, daß Kinder ein Schaltgerät eines Herdes o.dgl. unbeaufsichtigt einschalten. Als Folge davon können auf dem Herd abgelegte Dinge verbrannt werden oder Personen sich durch den heißen Herd Verletzungen zuziehen.

### AUFGABE UND LÖSUNG

Es ist Aufgabe der Erfindung, ein elektrisches Schaltgerät zu schaffen, das das Risiko eines unbeabsichtigten Einschaltens des Schaltgeräts oder eines Einschaltens durch Kinder o.dgl. vermeidet.

Diese Aufgabe wird gelöst durch ein Schaltgerät mit den Merkmalen des Anspruchs 1. Weitere vorteilhafte Ausgestaltungen der Erfindung sind Gegenstand der Unteransprüche.

Bevorzugt ist eine gegen einen elastischen Widerstand lösbare Blockiereinrichtung in der Verbindung zwischen Handhabe bzw. Betätigungsflächen und Lagerung der Verstelleinrichtung in dem Schaltgerätsockel vorgesehen, wobei die Blockiereinrichtung im ungelösten bzw. blockierenden Zustand einen Formschluß zwischen Handhabe und Schaltgerätsockel zur Blockierung einer Verstellbewegung bildet. Eine solche Blockiereinrichtung kann ein ungewolltes bzw. versehentliches Verstellen oder Anschalten einer von dem Schaltgerät betätigbaren Einrichtung vermeiden. Das Vorsehen einer elastischen Widerstandseinrichtung kann es ermöglichen, daß sich die Blockierung in bestimmten Stellungen oder jeder Stellung selbsttätig aktiviert, um die inhärente Sicherheit zu erhöhen. Derartige Blockiereinrichtungen sind beispielsweise als Kindersicherungen im Einsatz, lösen ihre Aufgabe aber nur unvollständig.

Nach einer Ausgestaltungsmöglichkeit der Erfindung kann die Verstelleinrichtung eine Steuerachse und die Verstellbewegung eine Drehung um diese Achse sein, wobei die Achse vorteilhaft wenigstens eine Nockenwalze o. dgl. trägt bzw. zumindest drehfest mit ihr verbunden ist. Die Nockenwalze kann einen bereichsweise veränderlichen bzw. zunehmenden Radius aufweisen, der unterschiedlich stark ansteigen oder abnehmen kann. Die Steuerachse ist vorzugsweise mit einem Ende bzw. Endbereich in dem Schaltgerätsockel gelagert und weist an dem anderen Ende die Handhabe auf.

In weiterer Ausgestaltung kann die Handhabe, vorzugsweise auch die Steuerachse, in Längsrichtung der Steuerachse zumindest teilweise gegenüber dem Schaltgerät und/oder gegenüber der Nockenwalze beweglich sein. Dies ermöglicht es, die Blockiereinrichtung in Längsrichtung der Steuerachse lösbar und/oder aktivierbar zu gestalten. Eine Lösung der Blockierung durch Drücken und/oder Drehen der Handhabe wird als besonders vorteilhaft angesehen.

Im Bereich des Schaltgerätsockels kann zwischen Steuerachse und Schaltgerätsockel eine Federung vorgesehen sein, insbesondere als die Steuerachse umgebende Feder mit konstantem Durchmesser. Die Feder kann an einem zumindest teilweise umlaufenden Vorsprung der Steuerachse und einem Boden einer Ausnehmung in dem Schaltgerätsockel anliegen. Die Feder ist vorteilhaft aus Metall, beispielsweise eine Spiralfeder mit wenigen Windungen.

Gemäß einer Ausführungsmöglichkeit der Erfindung ist die Blockiereinrichtung zwischen Steuerachse und Schaltgerätsockel gebildet und im Bereich des Schaltgerätsockels angeordnet. Zumindest teilweise kann sie die Lagerung einschließen. Es ist möglich, die Steuerachse im Bereich ihrer Lagerung unrund auszuführen, beispielsweise mit einem vorzugsweise abgeflachten Vorsprung oder Abschnitt, der sich über den Querschnitt der vorzugsweise runden Steuerachse erhebt. Passend dazu weist die Lagerung eine zu dem unrunden Abschnitt korrespondierende Ausnehmung in einem Durchbruch in dem Schaltgerätsockel auf. Eine Durchmessererweiterung der Steuerachse als unrunder Vorsprung kann das 1,5-fach bis 4-fache des Radius der Steuerachse aufweisen, vorzugsweise das ca. 2,5-fache. Die Durchmessererweiterung kann sich über eine Länge zwischen 1 mm und 10 mm, insbesondere ca. 3 mm, an der Steuerachse erstrecken, um ausreichende mechanische Festigkeit zu gewähren.

Eine alternative Möglichkeit besteht darin, die Blockiereinrichtung an einer Abdeckung zwischen Handhabe und Schaltgerätsockel angreifen zu lassen, wozu teilweise die Handhabe eingeschlossen werden kann. Die Abdeckung ist vorzugsweise als Frontblende eines Elektrogerätes o. dgl. ausgebildet, an deren Rückseite das Schaltgerät befestigt ist, wobei die Steuerachse durch eine Öffnung in der Blende verläuft und die Handhabe trägt. Der Vorteil einer Blockiereinrichtung, die die Handhabe umfaßt, liegt darin, daß an der Handhabe angreifende Betätigungskräfte direkt von der Blockiereinrichtung aufgefangen werden können ohne über weitere Einrichtungen wie die Steuerachse weitergeleitet werden zu müssen.

Die Blockiereinrichtung kann wenigstens eine Ausnehmung und wenigstens einen korrespondierenden und beim Blockieren darin eingreifenden Vorsprung aufweisen, die durch eine Bewegung der Handhabe in Längsrichtung der Steuerachse in bzw. aus dem Eingriff bringbar sind. Eine solche Bewegung ist vorteilhaft eine Bewegung der Handhabe auf die Abdeckung zu. Wenigstens eine Ausnehmung ist in der Abdeckung und wenigstens ein Vorsprung ist an einem durch die Öffnung der Abdeckung ragenden radial innen gelegenen Abschnitt der Handhabe ausgebildet. Wird die Handhabe gegen die Abdeckung gedrückt, fährt der Vorsprung an der Handhabe aus der Ausnehmung in der Abdeckung aus und die Handhabe ist frei drehbar.

Bevorzugt weist die Handhabe ein an der Steuerachse befestigtes Knebelinnenteil und ein daran angebrachtes Knebelaußenteil mit Betätigungsflächen auf. Das Knebelaußenteil kann als Ring den Innenteil im wesentlichen umschließen bzw. umgeben und gegenüber diesem drehbar und axial gegen einen elastischen Widerstand verschiebbar sein. Zwischen den beiden Teilen können korrespondierende Rastmittel angeordnet sein, die im Normalzustand, der vorzugsweise durch den Widerstand automatisch hergestellt wird, voneinander frei sein bzw. freikommen können. Durch axiales Verschieben ist es dann möglich, sie in Eingriff zu bringen und in Umfangsrichtung formschlüssig zu verbinden. Danach ist eine Übertragung von Kräften in Umfangsrichtung, also Verstellkräften, von dem Knebelaußenteil bzw. den Betätigungsflächen an den Innenteil bzw. die Steuerachse möglich.

Die Rastmittel umfassen bevorzugt wenigstens eine Ausnehmung und wenigstens einen dazu korrespondierenden Vorsprung, die insbesondere im Bereich des Außenumfangs des Knebelinnenteils ausgebildet sind zum besseren Auffangen von Drehmomenten. Vorteilhaft ist wenigstens eine Ausnehmung an dem Knebelinnenteil und wenigstens ein passender Vorsprung an dem Knebelaußenteil ausgebildet. Bei jeweils genau einer Ausnehmung und einem Vorsprung kann eine Verrastung nur in einer Position stattfinden. Eine Verrastung in mehreren Positionen ist durch das Vorsehen mehrerer Ausnehmungen bzw. Vorsprünge möglich.

In weiterer Ausgestaltung der Erfindung kann eine Zusatzfederung als elastischer Widerstand zwischen Knebelinnenteil und Knebelaußenteil vorgesehen sein, insbesondere im Bereich des Innenumfangs des Knebelaußenteils. Eine kurze Spiralfeder, die in einem schmalen kreiszylindrischen Zwischenraum zwischen Knebelinnenteil und Knebelaußenteil verläuft, bietet sich hierfür an. Ihre Federkonstante bzw. ihr Widerstand kann größer gewählt sein als die der Federung des Knebelinnenteils gegenüber dem Schaltgerätsockel, wodurch bei einem Eindrücken der Handhabe bzw. der Betätigungsflächen über den Knebelaußenteil zuerst der Knebelinnenteil gegenüber dem Schaltgerätsockel bewegt werden kann, bevorzugt zur Lösung der Blockiereinrichtung, und anschließend der stärkere Widerstand der Zusatzfedereinrichtung überwunden wird, um Knebelinnen- und Knebelaußenteil zur Betätigung der Steuerachse miteinander zu verbinden. Auf diese Weise ist es möglich, eine nur in einer Stellung selbsttätig einrastende Blockiereinrichtung zu lösen um das Schaltgerät zu betätigen, wobei sich Knebelinnen- und Knebelaußenteil wieder selbsttätig in der Weise voneinander trennen, daß der Knebelaußenteil gegenüber dem Innenteil frei drehbar ist. Zur Verstellung des Schaltgeräts muß erst wieder der Eingriff hergestellt werden.

Der Knebelinnenteil kann axial verschiebbar auf der Steuerachse gelagert sein, wobei diese zumindest teilweise seitlich abgeflacht ist. Darauf kann der Innenteil mit einem korrespondierenden zentralen Sackloch, in dem sich eine Federeinrichtung befindet, aufgesetzt sein. Die Steuerachse ist dabei gegenüber dem Schaltgerätsockel axial unbewegbar. Durch das axiale Verschieben des Knebelinnenteils gegenüber einer Abdeckung des Sockels oder Frontblende kann ein Lösen und/oder Aktivieren der Blockierung erfolgen. Alternativ ist die Steuerachse axial verschiebbar in dem Schaltgerätesockel gelagert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen dargestellt und werden im folgenden näher erläutert. In den Zeichnungen zeigen:
- Fig. 1: eine aus einem Flachmaterial herausgearbeitete Platine mit Anschlüssen, die abschnittsweise bereits umgebogen sind,
- Fig. 2: eine Schrägansicht der Platine aus Fig. 1,
- Fig. 3: eine Seitenansicht der Platine aus Fig. 1,
- Fig. 4: einen Querschnitt durch eine Platine zwischen zwei Spritzguß-Werkzeughälften,
- Fig. 5: einen schematischen Fertigungsablauf gemäß der Erfindung zur Herstellung eines Schaltgerätsockels mit Anschlüssen aus Flachbandmaterial,
- Fig. 6: eine Schrägansicht der Innenseite eines erfindungsgemäßen Schaltgerätsockels,
- Fig. 7: eine Schrägansicht der Rückseite des Schaltgerätsockels aus Fig. 6,
- Fig. 8: eine Draufsicht auf einen metallischen Träger mit Dickschichtheizwiderstand und Kontaktfeldern,
- Fig. 9: eine Seitenansicht eines Schnappschalters mit einem Träger aus Fig. 8,
- Fig. 10: eine Schrägansicht einer Variante des Schnappschalters aus Fig. 9 mit Justiereinrichtung am Ende des Thermobimetalls,
- Fig. 11: einen Querschnitt durch eine Anordnung eines elektrischen Schaltgerätes hinter einer Frontblende mit einer lösbaren Blockiereinrichtung zwischen einem zweiteiligen Knebel und der Frontblende,
- Fig. 12: einen Schnitt durch die Blockiereinrichtung aus Fig. 11,
- Fig. 13: eine Variante einer Blockiereinrichtung, die teilweise von einer speziell geformten Öffnung im Boden des Schaltgerätsockels gebildet wird,
- Fig. 14: eine Steuerachse für das Schaltgerät mit verschiedenen Verstell- bzw. Nockenwalzen, welche an einem Ende korrespondierend zu der Öffnung aus Fig. 13 ausgebildet ist,
- Fig. 15: einen Schalterteil mit angesetztem Schaumstoffblock als Federung,
- Fig. 16: eine Draufsicht auf einen Schaltgerätsockel entsprechend Fig. 6 mit eingesetztem Schiebeschalter samt Schaumstoffblock entsprechend Fig. 15 und
- Fig. 17: eine Schrägansicht der Vorderseite eines fertigen vormontierten Schaltgeräts, das die Anordnung von Befestigungslöchern an dem Schaltgerätdeckel zeigt.

### DETAILLIERTE BESCHREIBUNG DER AUSFÜHRUNGSBEISPIELE

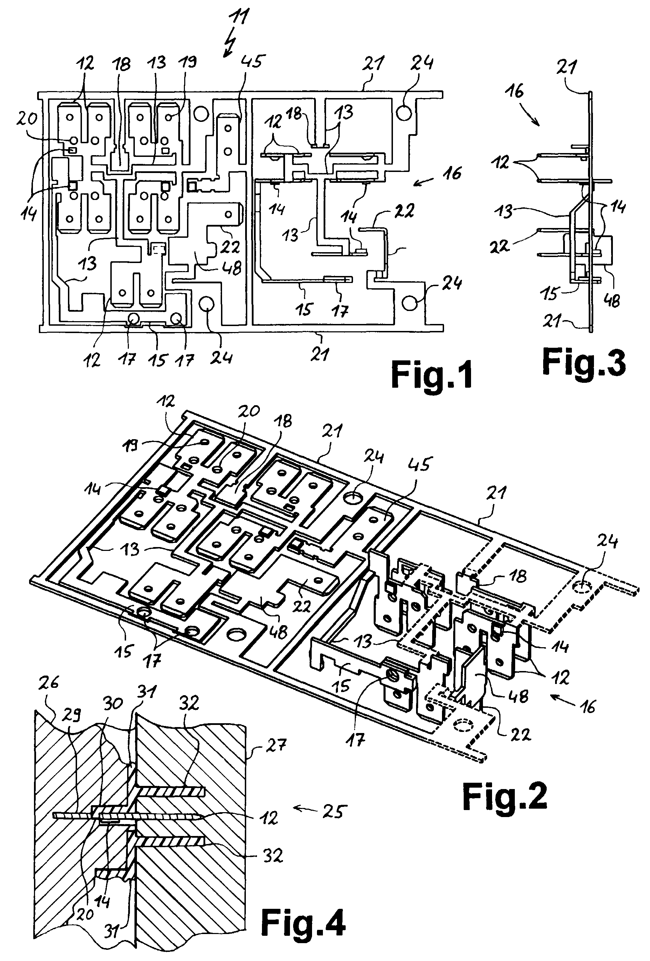

Fig. 1 zeigt einen Abschnitt eines Flachmaterialbandes 11, aus dem Anschlüsse in Form von Steckanschlußfahnen 12 samt Verbindungen zueinander herausgearbeitet sind. Das Herausarbeiten kann beispielsweise durch Stanzen erfolgen, möglich ist ebenso ein Schneiden mit Laserstrahl oder bei dünnen Materialien sogar mit Hochdruck-Wasserstrahlen. Die Mehrzahl der Steckanschlußfahnen 12 ist paarweise nebeneinander angeordnet und miteinander verbunden, wobei zwischen Fahnen bzw. Paaren von Fahnen Verbindungsstege 13 verlaufen. Teilweise tragen die Anschlüsse Kontaktköpfe 14. Im unteren Teil verläuft ein Aufnahmesteg 15, der zwei Bohrungen 17 zur Aufnahme einer Justierschraube aufweist. Der linke Abschnitt des Flachmaterialbandes 11 zeigt ein Stadium nach dem Herausarbeiten der Fahnen 12 sowie Verbindungsstege 13. Der rechte Abschnitt zeigt eine Platine 16, die durch entsprechendes Umbiegen der Steckanschlußfahnen 12 sowie der Verbindungsstege 13 in die Zeichenebene hinein hergestellt wird. Der Aufnahmesteg 15 ist aufgestellt und sein Ende derart umgebogen, daß die beiden Bohrungen 17 durchgängig hintereinander liegen. Möglich ist die Ausbildung mehrerer Platinen aus einem Flachmaterial, die zusammenhängen können.

Neben den Kontaktköpfen 14 sind an den Steckanschlußfahnen 12 bereits Rastöffnungen 19 sowie Fülllöcher 20 angebracht, an denen die aufschiebbaren Steckschuhe einrasten bzw. welche das Kunststoffmaterial für verbesserten Halt füllt.

Ebenso ragt eine metallische Befestigungslasche 18 von oben zwischen die Anschlußfahnen 12. An dieser kann ein weiter unten beschriebener Schaumstoffblock als Federung für Schalterteile befestigt werden.

Des weiteren sind Transportlöcher 24, eine Einzelfahne 22 mit einer Metallplatte 48 und ein Zusatzanschluß 45 vorgesehen.

Die Fig. 2 verdeutlicht in der Schrägansicht des Flachmaterials 11 aus Fig. 1 die Anordnung der umgebogenen bzw. aufgestellten Steckanschlußfahnen 12 und Verbindungsstege 13 sowie des Aufnahmestegs 15 und der Befestigungslasche 18 der Platine 16. Die gestrichelt dargestellten Teile sind für die spätere Verschaltung im Schaltgerätsockel nicht erforderlich bzw. störend und werden zumindest teilweise entfernt. Lediglich der Verbindungssteg 13, der von der einen Gruppe von Anschlußfahnen 12 zu dem Aufnahmesteg 15 führt, bleibt erhalten. Vor allem der mittlere Verbindungssteg 13 bleibt zwar während des Spritzvorgangs erhalten, wird aber später durchtrennt. Die in Fig. 2 hintere Verbindung der Platine 16 zu dem äußeren Rahmen 21 kann schon in dem in Fig. 2 dargestellten Verfahrensschritt bis an die Anschlußfahnen 12 hin durchtrennt werden, ohne den Zusammenhalt der Platine 16 zu beeinträchtigen.

Lediglich ein Zusatzanschluß 45 mit einem Kontaktkopf 14 ist bei den dargestellten Beispielen nicht mit der Platine 16 verbunden. Er wird auch aus dem Flachmaterialband 11 herausgearbeitet und kann beim Spritzvorgang oder später in den Schaltgerätesockel eingearbeitet bzw. eingesetzt werden.

Ein Vorteil liegt darin, daß die gesamte Platine 16 in Zusammenwirkung mit dem äußeren Rahmen 21 durch die Verbindungsstege 13 zusammengehalten wird, und so als eine Baueinheit dem Spritzvorgang zugeführt werden kann. Im äußeren Rahmen 21 sind an Vorsprüngen die Transportlöcher 24 vorgesehen, durch die das Flachmaterialband 11 in einer automatischen Fertigung sicher und positioniergenau erfaßt und transportiert werden kann.

Die Fig. 3 verdeutlicht, daß die Steckanschlußfahnen 12 und 22 sowohl in Reihen als auch parallel und mit einer gemeinsamen Höhe aus der Platine 16 heraus ausgebildet sind. Es ist zu erkennen, daß der Verbindungssteg 13, der zu dem Aufnahmesteg 15 führt, zum Teil aus der Ebene des äußeren Rahmens 21 herausgenommen ist. Der Zweck dieser speziellen Anordnung wird untenstehend erläutert.

Die Fig. 4 zeigt im Schnitt einen Teil der Platine 16 in einem Spritzgußwerkzeug 25, das aus einer oberen Werkzeughälfte 26 und einer unteren Werkzeughälfte 27 besteht. Stellvertretend für die Platine 16 ist eine Steckanschlußfahne 12 mit einem Kontaktkopf 14 sowie einem sich daran anschließenden Überstand 29 dargestellt. An den Kontaktkopf 14 anschließend weist das Flachmaterial ein Fülloch 20 auf, das mit Kunststoffmaterial eines an die Steckanschlußfahne 12 angegossenen Stützabschnitts 30 gefüllt ist. Im Bereich vor dem Kontaktkopf 14 verläuft die obere Werkzeughälfte 26 derart, daß er frei zugänglich bleibt.

Von dem Schaltgerätsockel sind ein Teil des Sockelbodens 31 sowie zwei von dessen Unterseite abstehende Trennstege 32 dargestellt. Die Trennstege verlaufen parallel zu den Steckanschlußfahnen 12 und trennen diese voneinander bzw. nach außen ab. Ihre genaue Ausbildung wird weiter unten dargestellt und erläutert.

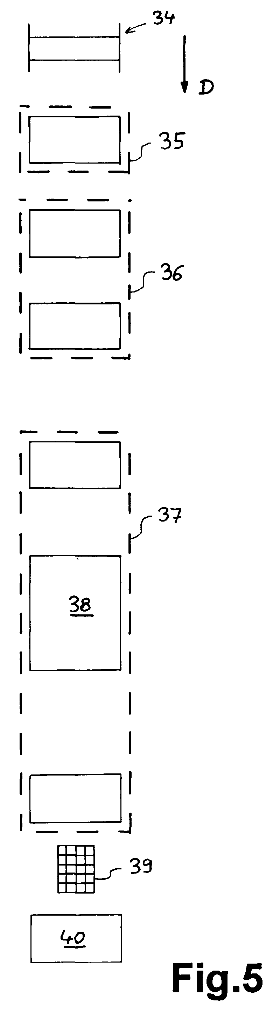

Die Fig. 5 zeigt schematisch ein Beispiel für den Verfahrensablauf zum Herstellen der Platinen 16 aus Flachmaterialband sowie das Umspritzen derselben. Die Durchlaufrichtung D verläuft in Fig. 5 von oben nach unten.

Zu Beginn wird Flachmaterial, am besten in Bandform mit passender Breite, beispielsweise auf eine Trommel 34 magaziniert und davon abgerollt. Auf das noch durchgängige Band werden durch Kontaktschweißen an einer Kontaktschweißstation 35 die Kontaktköpfe 14 jeweils an der richtigen Stelle beidseitig angebracht. Dies kann an der Schweißstation 35 oder an einer anderen Station erfolgen. Ein Teil der Kontakte kann auch durch Prägen hergestellt werden.

Als nächstes wird aus dem mit Kontakten versehenen Flachmaterialband 11 in einer Bearbeitungsstation 36 zuerst das Flachmaterialband entsprechend der Fig. 1 linker Abschnitt durch Stanzen herausgearbeitet. Anschließend an das Herausarbeiten werden in der Bearbeitungsstation 36 die Gewindelöcher in den Bohrungen 17 ausgebildet, beispielsweise durch Gewindeschneiden.

Das immer noch zusammenhängende Flachmaterialband 11 wird von der Bearbeitungsstation 36 zu der drei Arbeitsschritte umfassenden Finish-Station 37 geführt. Zuerst werden die Steckanschlußfahnen 12 sowie der Verbindungssteg 13 zu dem Aufnahmesteg 15 sowie dieser selber entsprechend Fig. 1 bis 3 ab- bzw. umgebogen. Danach wird die Platine 16, entweder noch mit dem äußeren Rahmen 21 verbunden oder schon davon abgetrennt, bevorzugt in sich zusammenhängend, in einer Umspritzanlage 38 in ein Spritzgußwerkzeug 25 gemäß Fig. 4 eingebracht und dementsprechend zumindest teilweise mit Kunststoff umspritzt. Als letzter Schritt in der Finish-Station 37 erfolgt das noch nötige Trennen der Platine 16, und zwar zum einen das Kappen der unerwünschten Verbindungsstege 13 innerhalb der Steckanschlußfahnen durch Durchstanzen durch den gespritzten Gerätesockelboden 31. Des weiteren werden evtl. die Verbindungen zu dem äußeren Rahmen 21, die aus dem Sockelboden herausstehen, durchtrennt. Nach den Arbeitsschritten in der Finishstation 37 ist der Schaltgerätsockel fertig und kann, beispielsweise in Kisten 39, weiteren Verarbeitungsstationen wie dem Montageautomat 40 zugeführt werden. Mehrere Flachmaterialbänder können parallel die gleichen Stationen durchlaufen.

In der Fig. 5 werden durch die Strichlierung der Stationen 35, 36 und 37 zusammenstehende Maschinen bzw. Anlagen gekennzeichnet. Dies hat jedoch keinerlei Auswirkung auf das Verfahrensprinzip. Ebenso sind lauter einzelne Maschinen für jeden Arbeitsschritt möglich, andere Kombinationen oder im wesentlichen eine einzige Anlage. Auch die Reihenfolge der Bearbeitungsschritte, vor allem vor der Finish-Station 37, kann variiert werden.

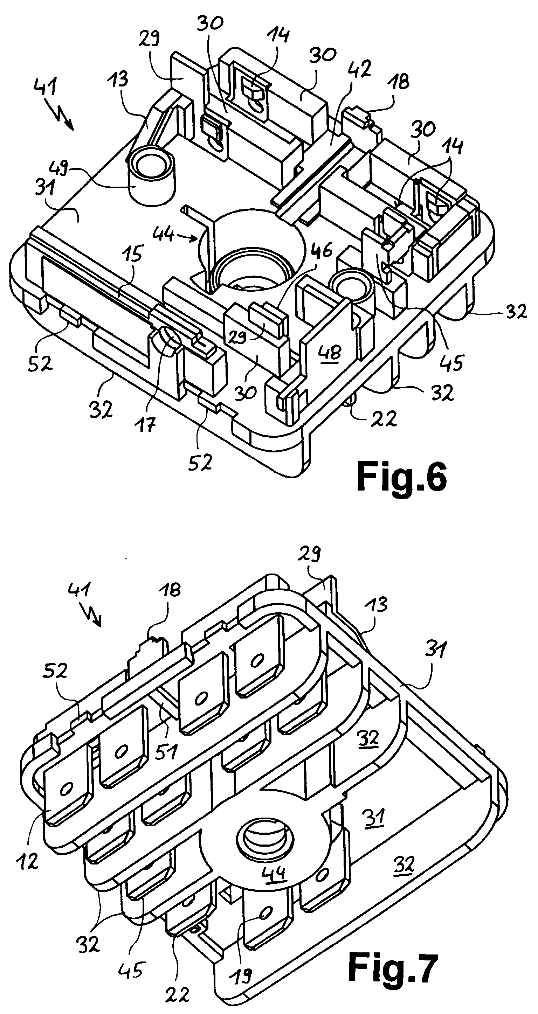

Die Fig. 6 zeigt einen beispielsweise nach einem erfindungsgemäßen Herstellungsverfahren hergestellten Schaltgerätsockel 41. Es ist zu sehen, daß auf einem im wesentlichen flachen Sockelboden 31 Aufbauten wie beispielsweise die Stützabschnitte 30 aufgesetzt bzw. angeformt sind. Die Überstände 29 der Anschlüsse stehen noch über die Stützabschnitte 30 über, während die oberen Abschnitte der Steckanschlußfahnen 12 samt der Kontaktköpfe 14 an den Stützabschnitten liegen. Zu erkennen sind vier in den Seitenbereichen angeordnete Kontaktköpfe 14, zwischen denen eine Längsführung 42 für einen weiter unten beschriebenen Schiebeschalter angeformt ist. An ihrem Ende am Rand des Schaltgerätsockels 41 ist die Befestigungslasche 18 vorgesehen.

In etwa in der Mitte des Schaltgerätsockels 41 ist eine im wesentlichen runde Aufnahme 44 für eine Steuerachse des Schaltgeräts ausgebildet. Ihre genaue Ausbildung wird untenstehend beschrieben.

Auf der in Fig. 6 rechten Seite des Schaltgerätsockels 41 ist ein Zusatzanschluß 45 vorgesehen, der ein gutes Stück über den Sockelboden 31 übersteht und an einem zweifach rechtwinklig abgebogenen Abschnitt einen Kontaktkopf 14 trägt. An diesen Kontaktkopf 14 kann ein nicht dargestellter, an dem Überstand 29 an der gegenüberliegenden Seite angebrachter Schaltarm mit einem Schaltkontakt anliegen und durch Betätigung durch die Steuerachse geöffnet oder geschlossen werden. Dabei verläuft der Schaltarm ein gutes Stück oberhalb der vier unteren Kontaktköpfe 14, so daß eine Betätigung in getrennten Ebenen erfolgen kann.

Der Zusatzanschluß 45, der in dem dargestellten Ausführungsbeispiel nicht in einer zusammenhängenden Platine 16 mit den anderen Anschlüssen in das Spritzgußwerkzeug 25 eingebracht wurde, kann entweder separat in das Werkzeug gebracht oder aber nachträglich in dem Sockel befestigt worden sein, beispielsweise durch Eindrücken in einen vorgeformten Ausschnitt.

Nahe an der Aufnahme 44 ist an einem Anschluß der Gegenkontaktkopf 46 für den Geräteschalter vorgesehen. Auch dieser Anschluß ist an einem Stützabschnitt 30 des Sockels 41 abgestützt. Seitlich daneben im Bereich des Randes des Sockels ist eine abstehende Halteplatte 48 aus Flachmaterial vorgesehen, an der der Geräteschalter befestigt werden kann.

Am gegenüberliegenden Ende der Längsführung 42 ist der Aufnahmesteg 15 zu erkennen, der an seinen beiden Längsseiten im wesentlichen von Kunststoff abgedeckt ist. Die mit Gewinde versehenen Bohrungen 17 sind dabei freigehalten. Am linken hinteren Rand des Sockels 41 sieht man einen Teil des Verbindungssteges 13, der von dem Aufnahmesteg 15 zu dem Überstand 29 und damit an Anschlüsse führt. Dieser Verbindungssteg 13 verläuft aus Isolationsgründen größtenteils innerhalb des Sockelbodens 31 und wurde als einziger Verbindungssteg nicht durchtrennt.

Links und rechts der Aufnahme 44 sind auf den Sockelboden Schraubaufnahmen 49 gesetzt bzw. angespritzt, in die entweder Schrauben zur Befestigung eines Gehäuseoberteils des Schaltgeräts oder zur Befestigung des Schaltgeräts an beispielsweise einer Frontblende eines Elektrogerätes eingreifen können. Von der Unterseite des Sockelbodens 31 gehen Trennstege 32 ab, die in Fig. 7 näher dargestellt sind.

Die Fig. 7 zeigt den Schaltgerätsockel 41 aus Fig. 6 in Schrägansicht von unten. Aus dem Sockelboden 31 stehen die sämtlich parallel ausgerichteten Steckanschlußfahnen 12 vor. In der Mitte des Sockelbodens ist die sich topfförmig über dessen Rückseite erstreckende Aufnahme 44 dargestellt.

Die Steckanschlußfahnen 12 sind in zwei Viererreihen angeordnet, wobei jeweils zwei hintereinander liegende Steckanschlußfahnen als Paare miteinander verbunden sind, dann kommt der Zusatzanschluß 45, der als Einzelanschluß 22, der mit der Halteplatte 48 verbunden ist sowie ein Paar von hintereinander angeordneten Anschlußfahnen, die einen den Gegenkontakt 46 tragenden und über die Innenseite ragenden Überstand 29 aufweisen. Die zwei einzelnen Steckanschlußfahnen sind mit jeweils den äußersten Fahnen an einer Seite der beiden Viererreihen in einer Reihe angeordnet. Auf diese Weise erhält man die in Fig. 7 deutlich zu erkennende klare und prägnante Anordnung der Steckanschlußfahnen mit jeweils gleicher Ausrichtung. Es ist noch ausreichend Fläche in dem Sockel 41 vorhanden, um weitere Steckanschlüsse o.dgl. vorzusehen.

Zwischen den beiden Viererreihen sowie zwischen dem Zusatzanschluß 45 und den restlichen drei Anschlußfahnen verlaufen parallel zu den Fahnen die Trennstege 32 über die ganze Breite des Sockels 41. Der mittlere Trennsteg verläuft an der Seite der topfförmigen Aufnahme 44 entlang, während der rechte Trennsteg zu beiden Seiten von der Aufnahme abgeht. Sie sind durchgängig an den Sockelboden 31 angespritzt. Zweck dieser Trennstege ist zum einen, das Kontaktieren von Steckanschlußfahnen, die durch die Stege getrennt sind, mittels Kurzschlüssen o.dgl. weitgehend zu vermeiden. Zu diesem Zweck haben die Stege mindestens die Höhe der Anschlußfahnen bzw. überragen diese. Zum anderen wird durch die Trennstege die Kriechstrecke zwischen parallelen Steckanschlußfahnen erheblich vergrößert und somit die Isolierung des Schaltgeräts verbessert. Ebenso ist es zu diesem Zweck möglich, zwischen Anschlußfahnen oder Paaren einer Reihe ähnliche Stege anzuformen, wie beispielsweise den Flachsteg 51.

Die Trennstege 32 können genau in der Mitte zwischen den Steckanschlußfahnen 12 verlaufen. Ebenso können sie etwas versetzt sein, um das Eingreifen ebensolcher Stege, die an dem Anschlußstecker zu demselben Zweck vorgesehen sein können, zu ermöglichen.

Die Ausbildung der Steckanschlußfahnen an den Kontaktköpfen 14 in Paaren hat den Zweck, daß dadurch Weiterverschaltungen erheblich vereinfacht sind. Somit muß an die nicht dargestellten Klemmschuhe des Anschlußsteckers jeweils nur ein Kabel angeschlossen werden. Auf diese Weise läßt sich der Aufwand auch für den Anschlußstecker reduzieren.

An zwei Seiten des Sockelbodens 31, nämlich denen mit der Befestigungslasche 18 und den Gewindebohrungen 17, sind am Rand jeweils zwei Rastvorsprünge 52 angeformt. Daran können entsprechende Rastlaschen des Gehäuseoberteils angreifen, um den Sockel 41 mit einem Oberteil werkzeuglos zu verbinden.

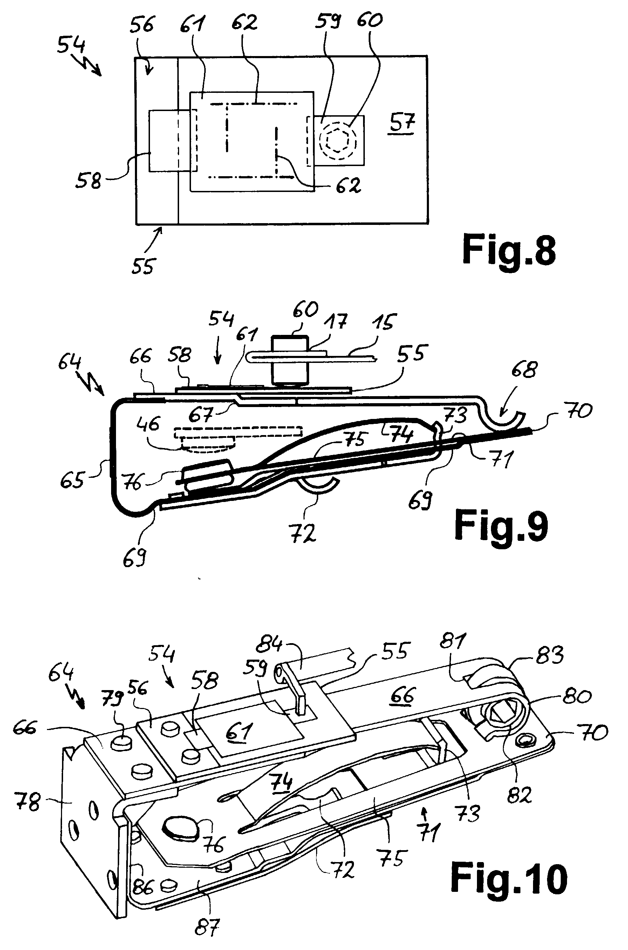

In der Fig. 8 ist eine Heizeinrichtung 54 gemäß einem Aspekt der Erfindung in Draufsicht dargestellt. Sie besteht aus einem metallischen Träger in Form einer rechteckigen Trägerplatte 55. Wie zuvor beschrieben, kann die Platte ganz aus einem für Dickschichtverfahren geeigneten Stahl bestehen oder einen Sandwichaufbau mit einer Kernschicht aus Kupfer aufweisen. Wichtig ist, daß sie zumindest eine, vorteilhaft zwei, Stahloberflächen 56 aufweist. Auf diese wird eine Isolierschicht 57 aufgebracht, wobei ein Streifen der Stahloberfläche 56 (am linken Ende der Platte) nicht bedeckt ist. Auf die beispielsweise aus Glas in einem Dickschichtverfahren hergestellte Isolierschicht 57 wird ein Anschlußkontaktfeld 58 aufgetragen, das großflächig den freien Streifen der Stahloberfläche 56 überlappt und etwa zur Hälfte auf der Isolierschicht liegt. In einem gewissen Abstand dazu befindet sich auch in dem rechten Abschnitt der Isolierschicht 57 ein Abgriffkontaktfeld 59. Beide Kontaktfelder 58 und 59 sind rechteckig, jedoch in unterschiedlicher Größe ausgeführt. Sie bestehen vorteilhaft größtenteils aus Metall und können in einem Dickschichtverfahren auf die Isolierschicht 57 bzw. die Stahloberfläche 56 aufgebracht und eingebrannt sein.

In einem dritten Arbeitsvorgang wird auf die Isolierschicht 57 eine den Randbereich der Kontaktfelder 58 und 59 überdeckende Schicht aus Widerstandsmaterial als flächiger Heizwiderstand 61 aufgebracht und eingebrannt. Die Überlappung zu den Kontaktfeldern sollte so groß sein, daß eine ausreichende und sichere Kontaktierung gewährleistet ist.

Zur präzisen Abstimmung des Heizwiderstandes 61 auf einen gewünschten bzw. vorgegebenen Widerstandswert können beispielsweise mit einem Laser strichpunktiert dargestellte Trennlinien 62 in den Heizwiderstand 61 geschnitten werden. Dies erfolgt bevorzugt in einer automatischen Abgleichanlage, in der während des Laserschneidens durch Messung an den beiden Kontaktfeldern 58 und 59 der Widerstandswert des Heizwiderstandes 61 permanent gemessen wird.

In einem letzten Arbeitsschritt wird zumindest auf die Oberfläche des Heizwiderstandes 61 eine nicht dargestellte Passivierungsschicht aufgebracht. Diese schützt das Widerstandsmaterial vor äußeren Einflüssen und verhindert beispielsweise das Zusetzen der Trennlinien 62 mit Verunreinigungen. Die Passivierungsschicht, die bevorzugt zumindest teilweise aus Glas besteht, kann bis auf das Abgriffkontaktfeld 59 theoretisch die gesamte Seite der Heizeinrichtung 54 bedecken. Die Unterseite der Platte 55 sollte zumindest im Bereich des freien Streifens frei bleiben.

Im Betrieb erfolgt die Kontaktierung des Heizwiderstandes 61 einerseits über die Trägerplatte 55 und das Anschlußkontaktfeld 58. Andererseits liegt eine weitere Kontaktierung an dem Abgriffkontaktfeld 59 an, beispielsweise eine punktiert dargestellte, in die Zeichenebene hinein verlaufende Innensechskantschraube 60. Einzelheiten hierzu sind aus Fig. 9 bzw. Fig. 10 ersichtlich.

Die Heizeinrichtungen 54 können entweder großflächig aus einem entsprechenden Flachmaterial durch das Aufbringen der entsprechenden Schichten in vielfacher Anzahl auf große Flächenbereiche und abschließendes Vereinzeln in einzelne Heizer hergestellt werden. Alternativ werden zuerst die Träger 55 auf entsprechende Größe gebracht und darauf der Schichtaufbau aufgebracht. Der Vorteil der ersten Methode liegt in der verbesserten Handhabung großer Metallplatten sowie rationeller Bearbeitungsmethoden.

Die Fig. 9 zeigt in Seitenansicht einen Schnappschalter 64 als Geräteschalter. An einem U-förmigen Trageblech 65 ist an einem oberen kurzen Schenkel als Schaltorgan ein Thermobimetallstreifen 66 befestigt, beispielsweise durch Kontaktschweißen oder Vernieten. Der Bimetallstreifen 66 weist in einem gewissen Abstand von dieser Verbindung einen Doppelknick 67 auf, um daran anschließend in gleicher Richtung in der Fig. 9 nach rechts weiterzulaufen. Der Streifen endet in einem nach unten und rechts abgebogenen Endhaken 68.

Zwischen der Verbindung des Bimetallstreifens 66 mit dem Trageblech 65 und dem Doppelknick 67 ist an seiner oberen Seite eine Heizeinrichtung 54, bevorzugt entsprechend Fig. 8, befestigt, vorteilhaft durch Kontaktschweißen. Deren Heizwiderstand 61 liegt dabei in etwa mittig über dem Doppelknick 67. Damit kann ein Teil der Heizung die Heizleistung durch Kontaktwärme von der Trägerplatte 55 direkt an das Thermobimetall in dessen Wurzelbereich übertragen. Der andere Teil der Heizleistung wird durch Strahlungswärme bzw. Konvektion von der Heizung bzw. dem Träger 55 über den Luftspalt zu dem Thermobimetall 66 im Bereich nahe des Doppelknicks 67 übertragen. Eine Beheizung vor allem des Wurzelbereichs des Thermobimetallstreifens 66 nahe seiner Befestigung an dem Trageblech 65 bewirkt eine kontrollierbare und gleichmäßige Erwärmung des Bimetalls. Daraus wiederum resultiert eine besser kontrollierbare Verformung des Streifens 66 bzw. Positionsänderung des Endes 68.

An die Heizeinrichtung 54 bzw. an dem nicht dargestellten Abgriffkontaktfeld 59 liegt eine Justierschraube 60 an, die als Innensechskantschraube ausgeführt sein kann. Sie ist in dem Aufnahmesteg 15 bzw. in den Gewindebohrungen 17 gelagert. Die Justierschraube 60 dient einerseites als zweite Kontaktierung an den Heizwiderstand 61, wie bereits oben erläutert, und führt über den Aufnahmesteg 15 und einen nicht dargestellten Verbindungssteg 13 (siehe Fig. 1 bis 3, 6 und 7) zu einem Steckanschluß.

Als weitere Aufgabe dient die Justierschraube 60 zur genauen Justierung der Stellung des Thermobimetallstreifens 66 in einem ausgewählten Zustand durch Kraftübertragung mittels des Trägers 55. Eine Justiereinrichtung dieser Art weist neben der Funktion des Kontaktierens der Heizung ohne zusätzliche Bauteile den großen Vorteil auf, daß die Lagerung des Justierelements, nämlich der Aufnahmesteg 15, wie in Fig. 6 dargestellt und beschrieben, fest und in seiner Position unveränderlich an dem Schaltgerätsockel 41 angebracht ist. Somit kann durch Anlegen eines Werkzeugs an die Justierschraube 60 und daraus resultierende Kräfte an sich ohne eine Drehbewegung der Schraube keine Positionsänderung des Bimetallstreifes 66, die zu Fehlern führen könnte, auftreten. Die Trägerplatte 55 weist vorteilhaft eine ausreichende Materialstärke auf, daß sie nicht von der Federkraft des Trageblechs 65 einerseits und der Anlage an der Schraube 60 andererseits gegen den Bimetallstreifen 66 gedrückt wird.

Der andere, längere Schenkel 69 des Trageblechs 65 ist langgezogen ausgeführt und in der Fig. 9 rechts mit dem Ende 70 der Schnappfeder 71 verbunden, beispielsweise durch Nieten oder Schweißen. An der Unterseite des unteren Schenkels 69 ist ein weiteres Element angebracht, das einen Schleifer 72 zur Anlage an einer Verstelleinrichtung für den Schnappschalter 64 aufweist. Dieses Element kann als Kompensationsbimetall ausgeführt sein, mit der gleichen Schichtanordnung wie der Streifen 66. Dadurch ist ein Ausgleich von äußeren Temperaturänderungen möglich. Des weiteren ist ein Widerlager 73 daran vorgesehen, an dem sich ein Federbügel 74 der Schnappfeder 71 abstützt. Zu beiden Seiten des Federbügels 74 verlaufen Federschenkel 75, die an dem anderen Ende der Schnappfeder 71 mit dem Federbügel verbunden sind und einen Schaltkontaktkopf 76 tragen. Die Schnappfeder 71 ist somit als Dreipunktblattfederelement ausgebildet.

Zwischen dem Schaltkontaktkopf 76 und dem Wurzelbereich des Bimetallstreifens 66 ist im Schaltgerätsockel 41 an einem Anschlußabschnitt der Gegenkontaktkopf 46 angebracht. Der Anschlußabschnitt ist mit einer nicht dargestellten Steckanschlußfahne 12 in dem Schaltgerätsockel 41 verbunden. Diese Teile sind gestrichelt dargestellt, da sie nicht zu der Baueinheit des Schalters 64 gehören.

Das aus zwei Schichten bestehende Thermobimetall 66 weist die Schicht mit dem geringeren Ausdehnungskoeffizienten auf der Seite zu der Schnappfeder 71 auf. Bei einer Erwärmung durch die Heizeinrichtung 54 krümmt sich das Thermobimetall 66 somit in Richtung auf die Schnappfeder 71 zu, in Fig. 9 nach unten, und betätigt diese durch Druck auf ihr freies Ende 70.

Bis auf die Justiereinrichtung mit der Schraube 60 und den Gegenkontaktkopf 46 bildet der Schnappschalter 64 eine Baueinheit. Mit dem die beiden Schenkel verbindenden Abschnitt des Trageblechs 65 wird der Schnappschalter 64 an einem Schaltgerätsockel 41 befestigt.

Fig. 10 zeigt in Schrägansicht eine geringfügige Abwandlung eines als Geräteschalter fungierenden Schnappschalters 64 gemäß der Erfindung. An dem abgebogenen Schenkel einer L-förmigen Grundplatte 78 ist ähnlich wie in Fig. 9 ein Thermobimetallstreifen 66 durch Nietköpfe 79 angebracht. Der Thermobimetallstreifen 66 ist länglich ausgebildet und weist an seinem freien Ende einen nach innen gebogenen Aufnahmeabschnitt 80 auf. Dieser ist mit einem mittig angebrachten Aufnahmeschlitz 81 versehen, der bis zum Ende des Streifens 66 verläuft. In diesem Schlitz ist als Justierelement ein Justierstift 82 gelagert, der sich über die Breite des Streifens 66 erstreckt und in seinem Mittelbereich eine flanschförmige Durchmessererweiterung 83 trägt. Diese Durchmessererweiterung beträgt teilweise wesentlich mehr als die Stärke des Streifens 66 und bildet an ihrem Außenumfang eine Kurve mit bevorzugt stetig zunehmendem Radius. Mit dem Außenumfang der Durchmessererweiterung 83 liegt der Justierstift 82 und somit der Bimetallstreifen 66 an dem freien Ende 70 der Schnappfeder 71 an. Je nach Stellung des Justierstifts 82 ist durch den sich ändernden Radius der Abstand zwischen Streifen 66 und dem Schnappfederende 70 veränderbar. Dies ist eine vorteilhafte Ausbildung einer Justiervorrichtung für den Schnappschalter 64 gemäß einem Aspekt der vorliegenden Erfindung.

Ähnlich wie in Fig. 9 trägt der Thermobimetallstreifen 66 im Bereich seiner Befestigung an der Grundplatte 78 eine Heizeinrichtung 54 in Form eines metallischen Trägers samt Dickschichtwiderstandsheizung 61 gemäß Fig. 8. Eine Kontaktfeder 84 liegt an dem Abgriffkontaktfeld 59 und dient neben der Kontaktierung des Heizwiderstandes 61 über das Anschlußkontaktfeld 58 und den Träger 55 an die Grundplatte 78 als zweite Kontaktierung.

Anders als in Fig. 9 ist an der L-förmigen Grundplatte 78 ein abgewinkeltes Ende 86 eines Trageblechs 87 durch Vernietung befestigt. Ansonsten ist das Trageblech 87 gemäß dem unteren Schenkel 69 in Fig. 9 ausgebildet, ebenso der Schnappschalter 64. Deswegen wird auf den Aufbau der Schnappfeder 71 samt Schleifer 72 und Schaltkontaktkopf 76 an dieser Stelle nicht weiter eingegangen.

Der Vorteil dieser Justiervorrichtung besteht unter anderem darin, daß die Angriffsrichtung des Werkzeuges zur Verstellung des Justierstiftes 82 senkrecht zu der Wirkrichtung der Justierung liegt. Dadurch können Verfälschungen bei der Justierung infolge der Krafteinwirkung des Werkzeuges auf den Justierstift 82 vermieden werden. Der Vorteil der dargestellten Ausbildung des Aufnahmeabschnittes 80 mit einer Krümmung nach innen liegt darin, daß sich bei einer Erwärmung des Thermobimetallstreifens 66 der Abschnitt verengt und damit den Justierstift 82 besonders fest und lagesicher umfaßt. Zur Vereinfachung des Einzetzens des Stiftes 82 in den Aufnahmeabschnitt 80 können die gegabelten Enden des Streifens wie dargestellt etwas aufgebogen sein.

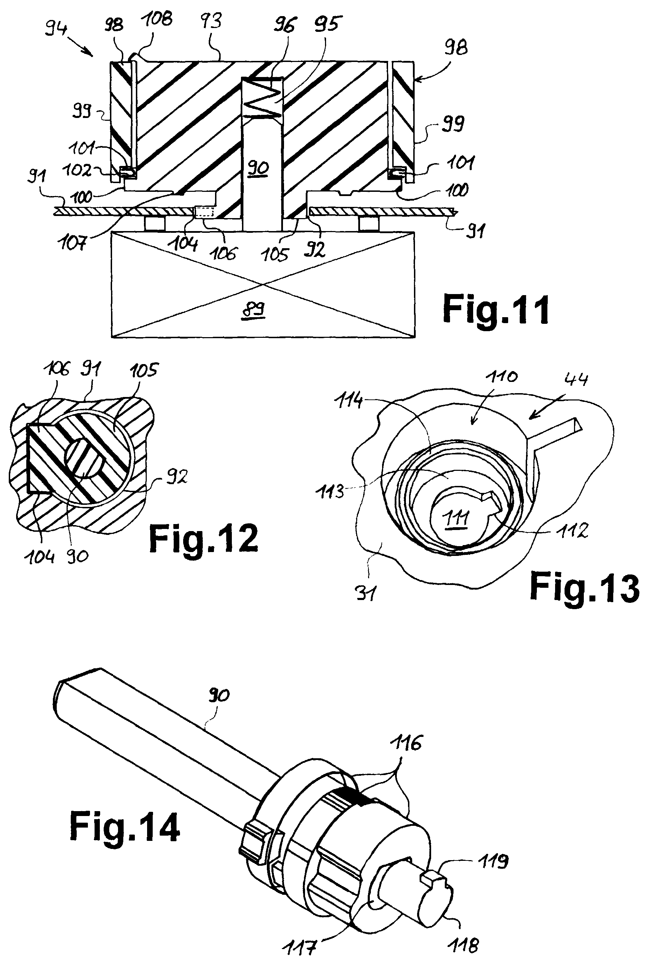

In der Fig. 11 ist im Schnitt ein elektrisches Schaltgerät 89 mit einer Steuerachse 90 dargestellt, das hinter einer Frontblende 91 eines elektrischen Gerätes, beispielsweise eines Küchengerätes, auf nicht dargestellte Weise befestigt ist. Die Steuerachse 90 reicht durch eine Durchgangsöffnung 92, deren Durchmesser allerdings weit größer ist. Auf die Steuerachse 90 aufgesetzt ist ein Knebelinnenteil 93 eines Schaltknebels 94. Die Aufnahmebohrung 95 ist korrespondierend zum Querschnitt der Steuerachse 90 ausgebildet mit der Besonderheit, daß die Steuerachse 90 darin axial beweglich ist. Mittels einer Spiralfeder 96 stützt sich der Knebelinnenteil im Bereich des Bodens der als Sackloch ausgeführten Aufnahmebohrung 95 gegen die Steuerachse 90 ab. Drehbar gegenüber dem Knebelinnenteil 93 gelagert ist dieses umgebend ein Knebelaußenteil 98 aufgesetzt, das an seinem Außenumfang Betätigungsflächen 99 für einen Bediener des Schaltgeräts 89 aufweist. Eine innere Schulter 100 an dem Knebelinnenteil 93 überragt den Innendurchmesser des Knebelaußenteils 98 und ist einer entsprechend geformten Ausnehmung 101 in dem Knebelaußenteil gegenüber angeordnet. Zwischen den beiden ist ein ringförmiges Federelement 102 eingelegt, das beispielsweise, wie in Fig. 11 gezeigt, einen nach außen offenen U-förmigen Querschnitt aufweisen kann. Durch das Federelement 102 kann der Knebelaußenteil 98 federnd gegen den Knebelinnenteil 93 bzw. die Schulter 100 gedrückt werden. Im in Fig. 11 dargestellten, weitgehend entspannten Zustand des Federelements 102 findet zwischen Knebelinnen- und Knebelaußenteil bei einer Drehbewegung des Außenteils 98 keine oder nur äußerst geringe Reibung statt. Wird dagegen der Außenring 98 gegen den inneren Teil 93 axial gegen die Federwirkung des Federelements 102 gedrückt, findet ein Kraftschluß, vorzugsweise auch ein Formschluß, in Umfangsrichtung statt und der Innenteil kann mittels des Außenteils gedreht werden.

Die Durchgangsöffnung 92 ist, wie in Fig. 12 in der Draufsicht deutlich wird, im wesentlichen kreisförmig mit einer eckigen Ausnehmung 104 ausgebildet. An dem Innenteil 93 ist ein Ansatz 105 angeformt, der in die Öffnung 92 ragt. Der Ansatz 105 ist korrespondierend zu der Öffnung 92 mit einem der Ausnehmung 104 entsprechenden Vorsprung 106 ausgebildet. Im Normalzustand gemäß Fig. 11 liegen Vorsprung 106 und Ausnehmung 104 im wesentlichen auf einer Höhe, so daß der Ansatz 105 nicht mit der Steuerachse 90 gedreht werden kann, da der Vorsprung 106 an der Ausnehmung 104 anschlägt.

Zur Betätigung des Schaltgeräts 89 durch Verdrehen der Steuerachse 90 muß der Vorsprung 106 aus der Ausnehmung 104 gebracht werden. Dies erfolgt bevorzugt gemäß Fig. 11 durch axiales Verschieben des Innenteils 93 auf die Frontblende 91 zu. Ein Eindrücken des Innenteils 93 erfolgt jedoch über den Knebelaußenteil 98 bzw. dessen Betätigungsfläche 99. Dadurch wird der Knebelinnenteil soweit in Richtung der Frontblende 91 gedrückt, bis die Begrenzungsnocken 107 an der Blende anliegen. Dann greift der Vorsprung 106 nicht mehr in die Ausnehmung 104 ein und ist mitsamt dem Innenteil 93 gegenüber der Frontblende 91 verdrehbar. Schon ein geringes Verdrehen bewirkt, daß bei Wegfall der axialen Kraft auf den Knebelinnenteil Ausnehmung 104 und Ausnehmung 106 nicht mehr übereinanderliegen und demzufolge nicht mehr automatisch in Eingriff kommen können. Nur in einer, der in Fig. 11 und 12 gezeigten, Stellung kann die Blockiereinrichtung aktiviert werden.

Bevorzugt sind die Federkonstanten der Spiralfeder 96 und des Federelements 102 derart ausgelegt, daß sich die Spiralfeder 96 erheblich leichter zusammendrücken läßt. Dies hat den Vorteil, daß durch eine axiale Drückbewegung des Außenteils 98 auf die Frontblende 91 zu zuerst der Knebelinnenteil 93 auf der Steuerachse 90 gleitend gegen die Blende gedrückt wird, wodurch die Blockiereinrichtung zwischen Ansatz 105 und Blende gelöst wird. Erst durch weiteres Eindrücken mit gesteigerter Kraft, wobei sich der Innenteil mit den Begrenzungsnocken 107 gegen die Blende abstützt, kommen Knebelaußen- und innenteil in Eingriff und durch eine Drehbewegung des Außenteils 98 kann der Innenteil 93 und somit die Steuerachse 90 verdreht werden. Dies hat den Vorteil, daß die Blockiereinrichtung in einem Betätigungsstadium gelöst wird, in dem von dem Knebelaußenteil 98 auf den Innenteil 93 keine Drehmomente übertragen werden und somit keine Belastungen der Blockiereinrichtungen auftreten können.

Da der Knebelaußenteil 98 gegenüber dem Innenteil 93 und somit dem Schaltgerät 89 frei drehbar ist, ist eine Positionsanzeige des Innenteils notwendig. Diese kann z.B. als Nase 108 ausgeführt sein, bevorzugt farblich von dem Knebel 94 abgehoben. Als weitere Funktion kann sie durch Rastung beim Aufsetzen des Knebelaußenteils 98 auf den Innenteil 93 den Außenteil gegen Abfallen sichern, indem sie dessen Stirnfläche ein Stück überragt.

Die Fig. 12 zeigt im Schnitt innerhalb der Frontblende 91 eine beispielhafte Ausbildung der Durchgangsöffnung 92 mit einer eckigen Ausnehmung 104, die sich über einen Winkelbereich von etwa 90° erstreckt. Der Ansatz 105 des Knebelinnenteils 93 ist korrespondierend zu der Ausnehmung 104 mit einem Vorsprung 106 versehen. In dem Ansatz 105 verläuft die an einer Seite abgeflacht ausgeführte Steuerachse 90, wobei beide Teile ohne nennenswerte Reibung axial gegeneinander verschiebbar sind. Anstelle der Frontblende kann ein Schaltgerätdeckel entsprechend ausgebildet sein und einen Teil der Blockiereinrichtung bilden.

Eine alternative Möglichkeit einer Blockiereinrichtung zeigt Fig. 13. Dargestellt ist eine mögliche Ausbildung der Aufnahme 44 in dem Sockelboden 31, die zur Aufnahme der Steuerachse 90 des Schaltgeräts 89 dient. Die Aufnahme 44 besteht im wesentlichen aus einer kreisrunden sacklochförmigen Ausnehmung 110 mit einer Durchgangsbohrung 111. Diese weist an einer Stelle, ähnlich wie die Durchgangsöffnung 92 in Fig. 12, einen Ausschnitt 112 in dem Ausnehmungsboden 113 auf. Auf dem Ausnehmungsboden 113 verläuft ein flanschartiger Vorsprung 114, der an seiner Stirnseite etwas angespitzt ist, mit einem gewissen Abstand zu den Wänden der Ausnehmung 110.

In die Aufnahme 44 gemäß der Fig. 13 kann eine Steuerachse 90 gemäß Fig. 14 eingesetzt werden. Der maximale Durchmesser der Achse 90 liegt etwas unterhalb des Durchmessers des Vorsprungs 114. Auf der abgeflachten Achse 90 sind mehrere Nockenwalzen 116 angebracht. Die Innenausnehmungen der Walzen 116 entsprechen dem Querschnitt der Steuerachse 90 und weisen gegenüber dieser ein gewisses Spiel auf, so daß die Walzen 116 gegenüber der Achse axial verschiebbar sind. Anschließend an die Unterseite der untersten Nockenwalze 116 geht der Querschnitt der Steuerachse 90 über in einen runden Fortsatz 118 über, der konzentrisch zu der Achse ausgebildet ist. Er weist einen Rastvorsprung 119 auf, so daß der Querschnitt von Fortsatz und Vorsprung zu der Durchgangsbohrung 111 in Fig. 13 korrespondiert, ähnlich wie in Fig. 12. Über den Fortsatz 118 wird eine Spiralfeder o.dgl. aufgesetzt, die gerade in den Vorsprung 114 einführbar ist. Sie stützt sich einerseits an dem Ausnehmungsboden 113 und andererseits an der Querschnittserweiterung 117 ab, die als Schulter zwischen Fortsatz und abgeflachtem Profil der Steuerachse 90 ausgebildet ist. Im eingesetzten Zustand läuft die Unterseite der untersten Nockenwalze 116 auf der Stirnseite des Vorsprungs 114. Durch die an der Querschnittserweiterung 117 anliegende Spiralfeder wird die Steuerachse 90 in einer Stellung gehalten, in der der Rastvorsprung 119 in dem Ausschnitt 112 der Durchgangsbohrung 111 sitzt und als Blockiereinrichtung ein Verdrehen der Achse durch Formschluß verhindert. Wird die Achse 90 durch axiale Krafteinwirkung gegen die Kraft der Feder eingedrückt, liegt der Vorsprung 119 hinter dem Ausnehmungsboden 113 und befindet sich nicht mehr im Eingriff mit dem Ausschnitt 112. Die Steuerachse 90 ist dann frei über einen Drehwinkel von fast 360° verdrehbar, und nur in einer einzigen Position, nämlich der Ausgangsposition ähnlich Fig. 12, rastet die Blockiereinrichtung durch die Kraft der Feder wieder ein.

Bei der Ausbildung einer Blockiereinrichtung gemäß den Fig. 13 und 14 kann ein Schaltknebel 94 fest auf der Steuerachse 90 sitzen. Hier ist die Blockiereinrichtung in den Schaltgerätsockel 41 verlegt, somit muß die aufzubringende Kraft von dem Sockel bzw. der Verbindung des Schaltgeräts 89 mit einer Halterung bzw. Frontblende 91 übernommen werden.

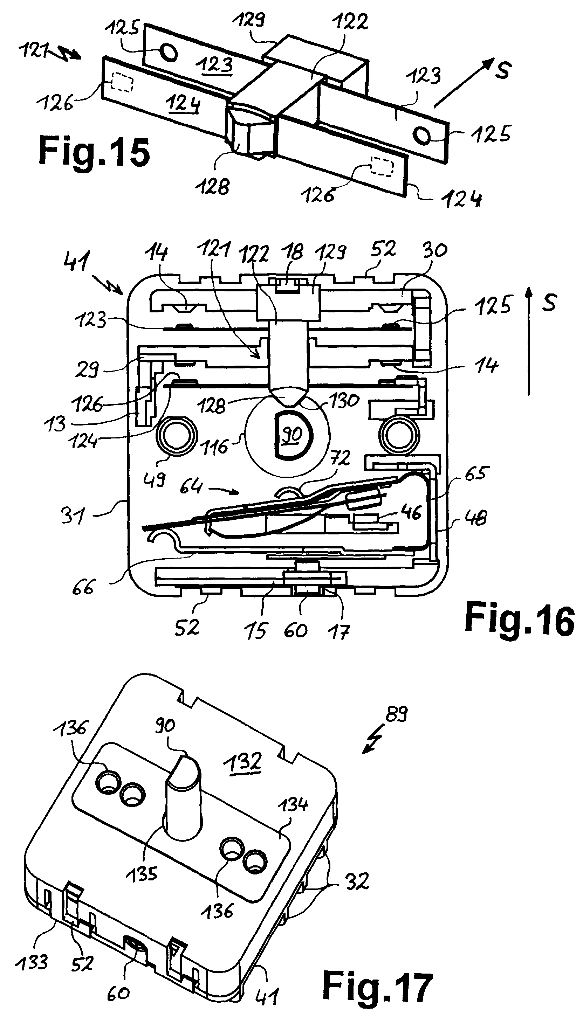

Die Fig. 15 zeigt ein Schalterteil 121, das zum Einsatz als Schiebeschalter ausgebildet ist. Ein Formkörper 122 weist einen durchgängigen dünnen Schaltarm 123 und einen durchgängigen dicken Schaltarm 124 auf, deren mittlerer Bereich jeweils vollständig von dem Formkörper umschlossen ist. Bis auf die unterschiedliche Materialstärke sind die Schaltarme 123 und 124 im wesentlichen gleich sowie in Längsrichtung des Formkörpers 122 bzw. die Schieberichtung sich überdeckend angeordnet. Im Bereich der Enden des dünnen Schaltarms 123 sind durch Prägung Prägekontaktköpfe 125 angebracht. In etwa im selben Bereich trägt der dicke Schaltarm 124 mit der gleichen Ausrichtung gestrichelt dargestellte Kontaktköpfe 126, die zum Schalten höherer elektrischer Leistungen aus speziellem Kontaktmaterial hergestellt und durch Schweißen angebracht sind.

An die vordere Stirnseite des Formkörpers 122 ist eine dreiecksförmige abgerundete Rastnase 128 angeformt. An der hinteren Stirnseite des Formkörpers ist gemäß einem Aspekt der Erfindung ein quaderförmiger Schaumstoffblock 129 angebracht, beispielsweise durch Verkleben. Er dient als Druckfeder zur elastischen Federung des Schalterteils 121 gegen einen Anschlag. Die Vorteile eines solchen voluminösen Federkörper aus Kunststoff liegen zum einen in der Isolierwirkung. Zum anderen wird keine aufwendige Führung o.dgl. für die Federung benötigt, v.a. wenn die laterale Ausdehnung größer ist als die in Belastungsrichtung.

Die Fig. 16 zeigt eine Draufsicht auf einen Schaltgerätsockel 41 gemäß den Fig. 6 und 7. In die Längsführung 42 ist der Schalterteil 121 eingesetzt. Der Schaumstoffblock 129 ist an der Befestigungslasche 18 durch Umbiegen eines Endabschnitts derselben befestigt. Der Vorteil einer zusätzlichen Verklebung des Schaumstoffblocks 121 mit dem Schalterteil 129 liegt unter anderem darin, daß auf diese Weise der Schalterteil über den Schaumstoffblock fixiert gelagert ist. Ein seitliches Verrutschen kann sowohl durch die Befestigung mittels des Schaumstoffblocks 129 als auch durch eine nicht dargestellte, in die Längsführung 42 eingreifende Führungsnase vermieden werden.

Die Rastnase 128 des Formkörpers 121 liegt an einer Nockenwalze 116 auf der Steuerachse 90 an, und zwar in einer Schaltausnehmung 130. Die radiale Tiefe der Schaltausnehmung 130 entspricht dem dargestellten Abstand der Kontaktköpfe 125 und 126 des Schalterteils 121 von den Kontaktköpfen 14 des Schaltgerätsockels 41 bzw. liegt etwas darüber. Die Schaltausnehmung 130 kann eine bestimmte Stellung der Steuerachse 90, beispielsweise die sogenannte Nullstellung, definieren. Durch Drehen der Steuerachse 90 wird, sobald die Rastnase 128 aus der Schaltausnehmung 130 bewegt wird und an dem Außenradius anliegt, der Schalterteil 121 in Schieberichtung S gegen den elastischen Widerstand der Schaumstoffederung gedrückt. Dadurch werden die Kontaktköpfe 125 bzw. 126 an die Kontaktköpfe 14 angelegt und verbinden diese jeweils durch die Schalterarme 123 und 124. Somit können Schaltvorgänge durch Verlassen bzw. Erreichen der in Fig. 16 dargestellten Stellung der Nockenwalze 116 ausgelöst werden. Dies kann beispielsweise ein elektrisches Signal zur Betätigung einer Funktionsanzeige sein, ebenso möglich ist die Aktivierung eines Topferkennungssystems o.dgl.

Ebenso ist in Fig. 16 ein eingebauter Schnappschalter 64 gemäß Fig. 9 dargestellt, auf den an dieser Stelle nicht nochmals eingegangen wird. Der Schleifer 72 liegt an einer der Übersichtlichkeit halber weggelassenen Nockenwalze 116 über der dargestellten für den Schalterteil 121 an. Der Schnappschalter 64 kann durch Kontaktschweißen oder Vernieten des Trageblechs 65 mit der Halteplatte 48 an dem Schaltgerätsockel befestigt werden. Nach dem Einbau des Schnappschalters wird die Justierschraube 60 in den Aufnahmesteg 15 eingedreht.

Fig. 17 zeigt ein elektrisches Schaltgerät 89 gemäß der Erfindung mit auf den Schaltgerätsockel 41 aufgesetztem Gehäusedeckel 132. Mittels U-förmiger Laschen 133 ist er an den Rastvorsprüngen 52 des Sockels 41 ohne Zuhilfenahme von Werkzeugen durch Aufrasten befestigt.

Der Deckel 132 weist einen mittig verlaufenden Befestigungsstreifen 134 auf, der vorzugsweise aus dünnem Metall oder Blech besteht. Symmetrisch zu dem Durchgang 135 für die Steuerachse 90 weist er jeweils zwei vorgefertigte Befestigungsbohrungen 136 auf, in die Blechschrauben o.dgl. eingeschraubt werden können. Alternativ können die Bohrungen 136 mit vorgefertigtem bzw. vorgeschnittenen Gewinde versehen sein. Der Abstand des inneren Paares von Bohrungen 136 kann beispielsweise einer US-Norm entsprechen, der Abstand des äußeren Paares von Bohrungen beispielsweise einer EG-Norm. Die Durchmesser der Bohrungen 136 können etwa 4 mm betragen. In der dargestellten Ausführung liegen die äußeren Bohrungen 136 in etwa über den Schraubaufnahmen 49 des Schaltgerätsockels 41 in Fig. 6. Auf diese Weise ist eine Verschraubung nicht nur des Deckels 132, sondern zusätzlich des die eigentlichen Schalteinrichtungen tragenden Sockels 41 mit einer Halterung, wie beispielsweise einer Frontblende 91, möglich.

An der unteren in der Fig. 17 sichtbaren Seite des Schaltgeräts 89 ist die Justierschraube 60 sichtbar, die auch bei aufgesetztem Deckel 132 erreichbar ist. Dies ermöglicht es, das Schaltgerät im zusammengesetzten Zustand zu justieren, was besonders für die Temperaturverhältnisse im Inneren sehr wichtig ist. Des weiteren sind die Trennstege 32 zu erkennen.

## Patentansprüche

1. Elektrisches Schaltgerät mit einem Schaltgerätsockel (41), mit wenigstens einem Schalter (64, 121), mit einer an dem Schaltgerätsockel gelagerten Verstelleinrichtung (90, 116) zur Beeinflussung des Schaltverhaltens des Schalters und mit einer Handhabe (94) mit Betätigungsflächen (99) für einen Benutzer, wobei eine gegen einen elastischen Widerstand (96) lösbare Blockiereinrichtung (104, 106; 112, 119) in der Verbindung zwischen Handhabe und Lagerung in dem Schaltgerätsockel vorgesehen ist und die Blockiereinrichtung im ungelösten Zustand einen Formschluß zwischen Handhabe und Schaltgerätsockel zur Blockierung einer Verstellbewegung bildet.

2. Elektrisches Schaltgerät nach Anspruch 1, dadurch gekennzeichnet, daß die Verstelleinrichtung eine Steuerachse (90) aufweist, die die Handhabe trägt, wobei die Handhabe (94) in Längsrichtung der Steuerachse zumindest teilweise gegenüber dem Schaltgerät (89), vorzugsweise zusätzlich gegenüber der Nockenwalze (116), beweglich ist.

3. Elektrisches Schaltgerät nach Anspruch 2, dadurch gekennzeichnet, daß die Blockiereinrichtung (104, 106; 112, 119) in Längsrichtung der Steuerachse (90) lösbar und/oder aktivierbar ist.

4. Elektrisches Schaltgerät nach Anspruch 2 oder 3, gekennzeichnet durch eine Federeinrichtung im Bereich des Schaltgerätsockels (41) zwischen Steuerachse (90) und Schaltgerätsockel, die vorzugsweise an einem zumindest teilweise umlaufenden Vorsprung (117) der Steuerachse und einem Boden (113) einer Ausnehmung (110) in dem Schaltgerätsockel anliegt.

5. Elektrisches Schaltgerät nach einem der Ansprüche 2 bis 4, dadurch gekennzeichnet, daß die Blockiereinrichtung (112, 119) zwischen Steuerachse (90) und Schaltgerätsockel (41) gebildet ist und im Bereich des Schaltgerätsockels angeordnet ist, wobei sie insbesondere zumindest teilweise von der Lagerung (44) gebildet ist.

6. Elektrisches Schaltgerät nach Anspruch 5, dadurch gekennzeichnet, daß die Steuerachse (90) zumindest im Bereich (118) ihrer Lagerung (44) unrund ist, insbesondere mit wenigstens einem abgeflachten Vorsprung (119), wobei die Lagerung eine zu dem unrunden Abschnitt korrespondierende Ausnehmung (112) in dem Schaltgerätsockel (41) aufweist.
